# EUROPEAN PATENT APPLICATION

(11) **EP 2 930 822 A1**
(43) Date of publication of application: **14.10.2015**
(21) Application number: 13862927.4
(22) Date of filing: 24.09.2013
(51) Int. Cl.: H02J 13/00, H02J 3/00, H02J 3/32, H02J 3/46, H02M 7/48

(54) **POWER ROUTER, POWER NETWORK SYSTEM, METHOD FOR CONTROLLING OPERATION OF POWER ROUTER, AND NON-TEMPORARY COMPUTER-READABLE MEDIUM STORING PROGRAM FOR CONTROLLING OPERATION OF POWER ROUTER**

(30) Priority: 10.12.2012 JP 2012269068
(71) Applicant: NEC Corporation, Tokyo 108-8001 (JP)
(72) Inventor: OKABE, Toshiya, Tokyo 108-8001 (JP)
(74) Representative: Vossius & Partner Patentanwälte Rechtsanwälte mbB
(86) International application number: PCT/JP2013/005618
(87) International publication number: WO 2014/091646

(57) **Abstract**

A power router is adequately managed or controlled to construct a power network system in which power cells are asynchronously connected with each other. A first leg (11) to a fourth leg (14) each include one end connected to a direct current bus (101), include an other end as an external connection terminal connected to an external connection party, and have a function of bidirectionally converting power. The control unit (19) controls an operation of each of the first leg (11) to the fourth leg (14). The control unit (19) includes a storage unit (191) and a CPU (192). The storage unit (191) includes a leg identification information database (194) including identification information of the first leg (11) to the fourth leg (14). The CPU (192) outputs an operation instruction to an instruction destination leg referring to the identification information of the leg identification information database (194).

## Description

### Technical Field

The present invention relates to a power router, a power network system, a power router operation control method, and a non-transitory computer readable medium having the power router operation control program stored thereon.

### Background Art

In order to construct a power feed system, needless to say, more stably expanding a power grid is an important task, and enabling a system to introduce a large amount of natural energy in future is becoming an important task, too. Hence, a power network system which is a digital grid (registered trademark) has been proposed as a new power grid (Patent Literatures 1 and 2 and Non-Patent Literature 1). The digital grid (registered trademark) is a power network system which subdivides a power grid into small-scale cells, and asynchronously connects the cells with each other. Each power cell is one house, a building or a commercial facility if the cell is small, and is a prefecture or a municipality if the cell is large. Each power cell naturally includes loads inside or includes a power generation facility or a power storage facility, too, in some cases. The power generation facility is, for example, a power generation facility which utilizes natural energy such as solar power generation, wind power generation or geothermal power generation.

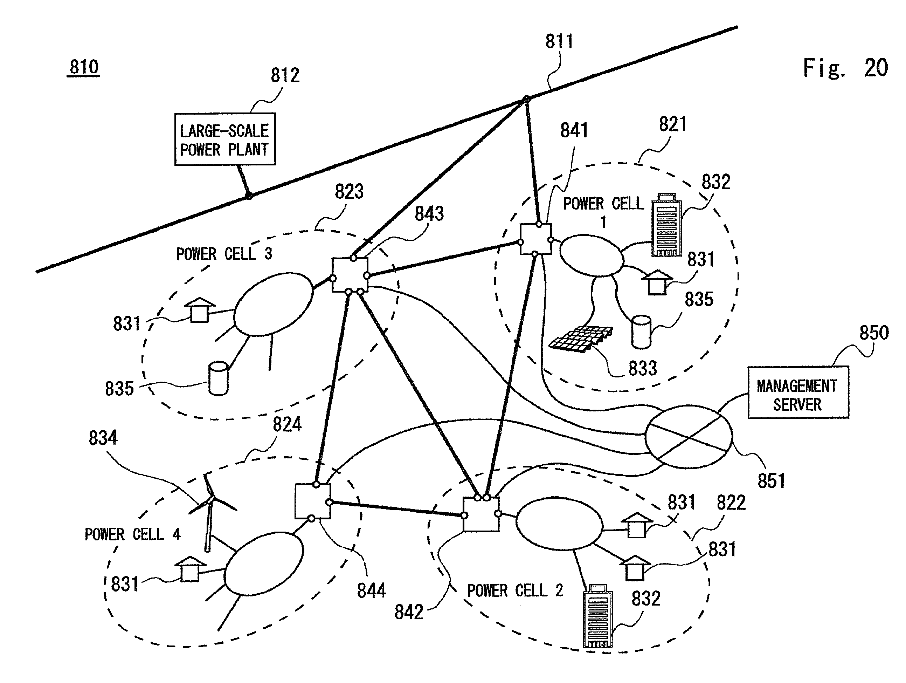

Power cells are asynchronously connected to freely generate power inside each power cell or smoothly interchange power between power cells. That is, even when a plurality of power cells are connected with other, a voltage, a phase and a frequency of power used in each power cell are out of synchronization with other power cells. Fig. 20 is a view illustrating an example of a power network system 810. In Fig. 20, a core system 811 feeds core power from a large-scale power plant 812. Further, a plurality of power cells 821 to 841 are installed. Each of the power cells 821 to 824 includes loads such as a house 831 and a building 832, power generation facilities (e.g. a solar panel 833 and a wind power generator 834) and a power storage facility (e.g. a battery 835). In addition, in this description, power generation facilities and power storage facilities will be collectively referred to as distributed power supplies.

Further, the power cells 821 to 824 include power routers 841 to 844 which are connections (connection ports) which are connected with other power cells and the core system 811, respectively. The power routers 841 to 844 include a plurality of legs. (For convenience of the drawings, reference numerals of the legs will not be indicated in Fig. 20, and white circles attached to the power routers 841 to 844 are connection terminals of the respective legs.) In this regard, a leg includes a connection terminal and a power converting unit, and each leg is allocated an address. In addition, power conversion in a leg refers to converting an alternating current into a direct current or a direct current into an alternating current, or changing the voltage, the frequency or the phase of power.

All power routers 841 to 844 are connected to a management server 850 through a communication network 851, and the management server 850 integrally controls operations of all power routers 841 to 844. For example, the management server 850 instructs each of the power routers 841 to 844 to feed power or receive power per leg. Thus, power is interchanged between power cells through the power routers 841 to 844.

Power is interchanged between power cells, so that, for example, one power generation facility (e.g. the solar panel 833 or the wind power generator 834) or one power storage facility (e.g. the battery 835) can be shared between a plurality of power cells. When power cells mutually interchange extra power, it is possible to stably keep a power demand and supply balance while substantially reducing facility cost.

### Citation List

### Patent Literature

PTL 1: Japanese Patent No. 4783453
PTL 2: Japanese Unexamined Patent Application Publication No. 2011-182641

### Summary of Invention

### Technical Problem

Enabling asynchronous connection between a plurality of power cells through power routes brings a great advantage, and therefore putting the power routers in practical use earlier is expected. However, actually putting the power routers in practical use involves a unique problem that a conventional power transmission and distribution system has never faced. Currently, a mainstream power transmission and distribution system assumes a power system whose voltage, phase and frequency completely synchronize with each other, and therefore power routers which connect power systems whose voltages, phases or frequencies are different need to take into account a new problem.

The present invention has been made in light of the above situation. An object of the present invention is to more adequately manage a power router to construct a power network system in which power cells are asynchronously connected with each other.

### Solution to Problem

A power router according to one aspect of the present invention includes: a direct current bus that maintains a voltage at a predetermined voltage rating; a plurality of power converting legs that each include a first connection terminal connected to the direct current bus, include a second connection terminal connected as an external connection terminal to an external connection party and include a function of bidirectionally converting power between the first connection terminal and the second connection terminal; and controlling means for controlling an operation of each of the plurality of power converting legs, and the controlling means includes first storage means for holding a first database that includes identification information of each of the plurality of power converting legs, and executes the operation of each of the power converting legs referring to the identification information of the first database.

A power network system according to one aspect of the present invention includes: one or a plurality of power routers; and a power system that the one or the plurality of power routers is directly or indirectly connected with, and the one or the plurality of power routes each include a direct current bus that maintains a voltage at a predetermined voltage rating, a plurality of power converting legs that each include a first connection terminal connected to the direct current bus, include a second connection terminal connected as an external connection terminal to an external connection party and include a function of bidirectionally converting power between the first connection terminal and the second connection terminal, and controlling means for controlling an operation of each of the plurality of power converting legs, and the controlling means includes first storage means for holding a first database that includes identification information of each of the plurality of power converting legs, and executes the operation of each of the power converting legs referring to the identification information of the first database.

A power router operation control method according to one aspect of the present invention in a power router that includes a direct current bus that maintains a voltage at a predetermined voltage rating, and a plurality of power converting legs that each include a first connection terminal connected to the direct current bus, include a second connection terminal connected as an external connection terminal to an external connection party and include a function of bidirectionally converting power between the first connection terminal and the second connection terminal, outputting an operation instruction to each of the plurality of power converting legs referring to the identification information of a first database that includes identification information of each of the plurality of power converting legs, and controlling an operation of each of the plurality of power converting legs.

A non-transitory computer readable medium having stored thereon a power router operation control program according to one aspect of the present invention causes a computer to, in a power router that includes a direct current bus that maintains a voltage at a predetermined voltage rating a plurality of power converting legs that each include a first connection terminal connected to the direct current bus, include a second connection terminal connected as an external connection terminal to an external connection party and include a function of bidirectionally converting power between the first connection terminal and the second connection terminal; and the computer that configures controlling means for controlling an operation of each of the plurality of power converting legs, and in which the computer includes first storage means for holding in advance a first database that includes identification information of each of the plurality of power converting legs, execute processing of outputting an operation instruction to each of the plurality of operation converting legs referring to the identification information of the first database, and controlling an operation of each of the plurality of power converting legs.

### Advantageous Effects of Invention

According to the present invention, it is possible to more adequately manage or control a power router to construct a power network system in which power cells are asynchronously connected with each other.

### Brief Description of Drawings

Fig. 1 is a block diagram illustrating a schematic configuration of a power router 100.
Fig. 2 is a block diagram of the power router 100 illustrating internal structures of legs.
Fig. 3 is a block diagram of the power router 100 more specifically illustrating the internal structure of the reg.
Fig. 4 is a block diagram illustrating a configuration example of a power router 170 including an AC through leg 60.
Fig. 5 is a block diagram illustrating a configuration of a power router 200.
Fig. 6 is a block diagram schematically illustrating a configuration of a storage unit 251.
Fig. 7 is a flowchart illustrating a plug-and-play operation of the power router 200.
Fig. 8 is a block diagram illustrating a configuration of a power router 300.
Fig. 9 is a block diagram schematically illustrating a configuration of a storage unit 311.
Fig. 10 is a flowchart illustrating an operation of monitoring each leg of the power router 300.
Fig. 11 is a block diagram illustrating a configuration of a power router 400.
Fig. 12 is a flowchart illustrating an operation of monitoring each leg of the power router 400.
Fig. 13 is a block diagram illustrating a configuration of a power router 500.
Fig. 14 is a block diagram schematically illustrating a configuration of a storage unit 251.
Fig. 15 is a flowchart illustrating a plug-and-play operation and a compatibility determining operation of the power router 500.
Fig. 16 is a block diagram illustrating a configuration of a power router 700.
Fig. 17 is a block diagram schematically illustrating a configuration of a power network system 1001 which is an example of a power network system.
Fig. 18 is a block diagram schematically illustrating a configuration of a power network system 1002 which is an example of a power network system.
Fig. 19 is a block diagram schematically illustrating a configuration of a power network system 1003 which is an example of a power network system.
Fig. 20 is a view illustrating an example of a power network system 810.

### Description of Embodiments

Embodiments of the present invention will be described below with reference to the drawings. A specific configuration of an above-described power router will be described in the following embodiments. In this regard, each embodiment by no means limits the present invention only to a power router, and it can be understood that the present invention includes other components such as a device in which the power router is embedded. The same elements will be assigned the same reference numerals in each drawings, and will not be described when necessary.

### First Embodiment

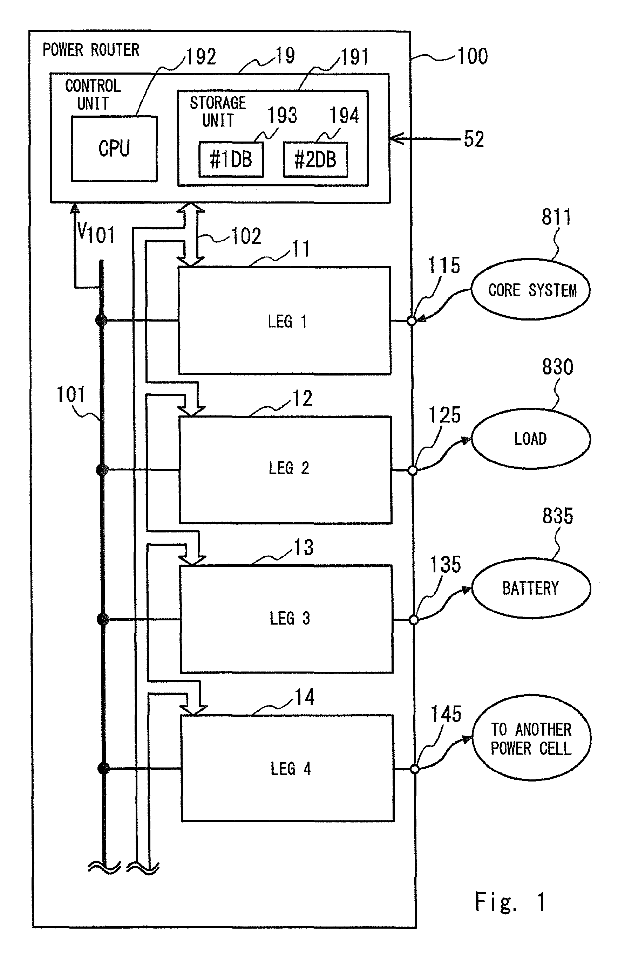

First, a power router 100 according to the first embodiment will be described. The power router 100 is a specific example of above power routers 841 to 844 (Fig. 20). Fig. 1 is a block diagram illustrating a schematic configuration of the power router 100. The power router 100 roughly includes a direct current (DC) bus 101, a first leg 11, a second leg 12, a third leg 13, a fourth leg 14 and a control unit 19. In addition, in Fig. 1, the first leg to the fourth leg are indicated as a leg 1 to a leg 4, respectively, for convenience of the drawings.

The DC bus 101 is connected with the first leg 11 to the fourth leg 14 in parallel. The DC bus 101 feeds DC power. The control unit 19 maintains a voltage V₁₀₁ of the DC bus 101 at a predetermined fixed value by controlling operation states of the first leg 11 to the fourth leg 14 (an operation of feeding power to an outside, an operation of receiving power from the outside and the like) through a communication bus 102. That is, the power router 100 is connected to the outside through the first leg 11 to the fourth leg 14, and converts all power which is interchanged with the outside, into DC power once and flows the DC power on the DC bus 101. By converting power into DC power once, it is possible to asynchronously connect power cells even when frequencies, voltages or phases are different.

In addition, an example where the power router 100 includes four legs will be described in the present embodiment. However, the present embodiment is only exemplary. The power router can be provided with an arbitrary number of legs equal to or more than two legs. In the present embodiment, the first leg 11 to the fourth leg 14 employ the same configuration. However, the two or more legs included in the power router may employ the same configuration or different configurations. In addition, a leg will be also referred to as a power converting leg below.

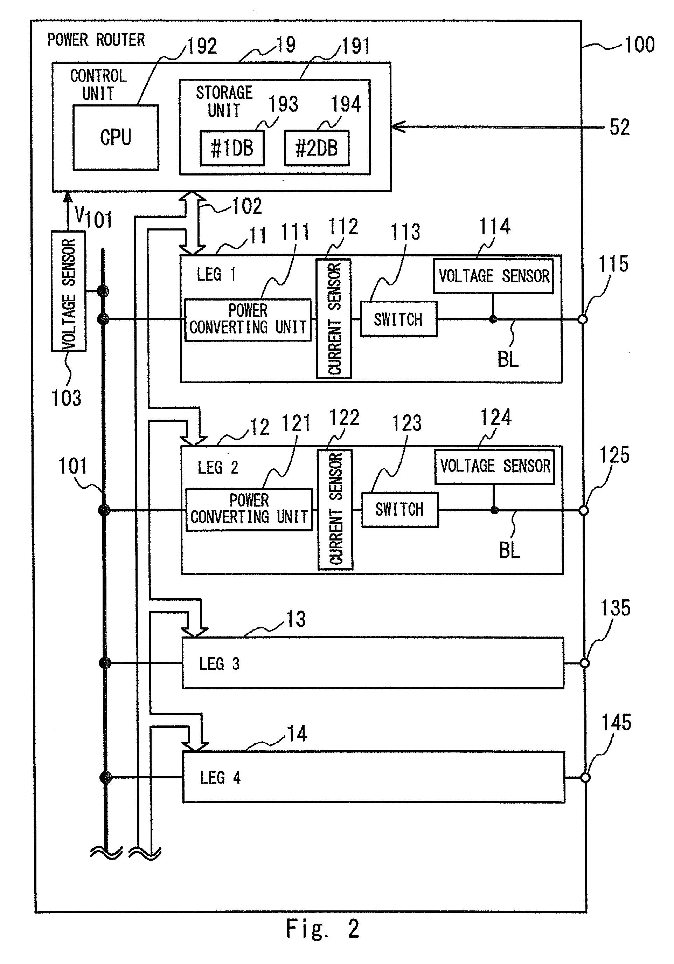

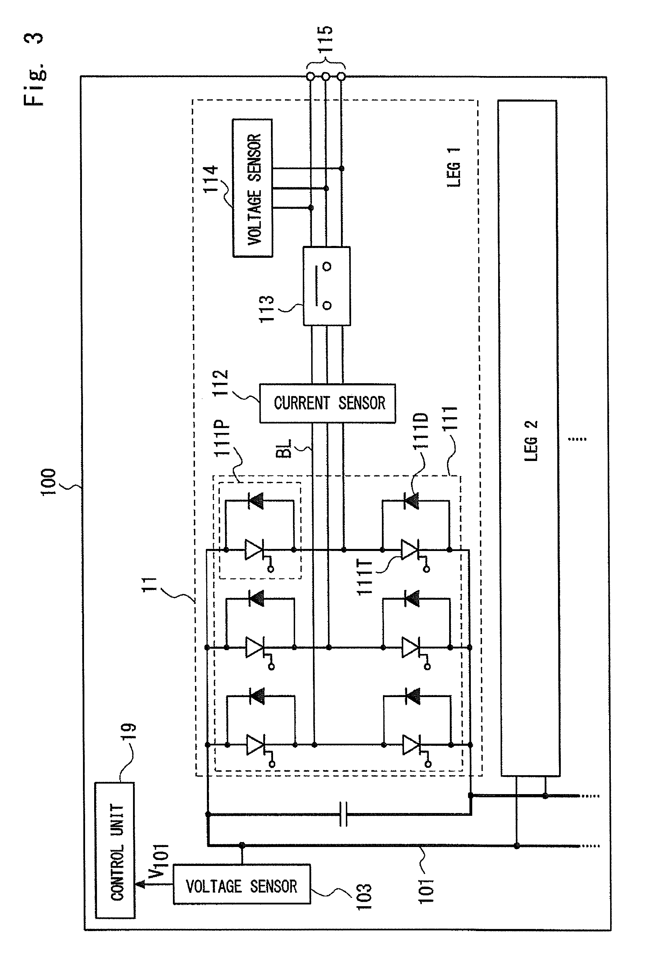

Next, the first leg 11 to the fourth leg 14 will be described. Fig. 2 is a block diagram of the power router 100 illustrating an example of internal structures of the legs. The first leg 11 to the fourth leg 14 employ the same configuration. However, for simplification of the drawings, Fig. 2 illustrates the internal structures of the first leg 11 and the second leg 12, and does not illustrate the internal structures of the third leg 13 and the fourth leg 14. Fig. 3 is a block diagram of the power router 100 more specifically illustrating the internal structure of the leg. The first leg 11 to the fourth leg 14 employ the same configuration. However, for simplification of the drawings, Fig. 3 illustrates the internal structure of the first leg 11, and does not illustrate the internal structure of the second leg 12, the third leg 13, the fourth leg 14 and the communication bus 102.

The first leg 11 to the fourth leg 14 are provided to the DC bus 101 in parallel. As described above, the first leg 11 to the fourth leg 14 employ the same configuration. Hereinafter, a configuration of the first leg 11 will be typically described. As illustrated in Fig. 2, the first leg 11 includes a power converting unit 111, a current sensor 112, a switch 113 and a voltage sensor 114. The first leg 11 is connected to, for example, a core system 811 through a connection terminal 115. The power converting unit 111 converts alternating current (AC) power into DC power or DC power into AC power. DC power flows in the DC bus 101, i.e., the power converting unit 111 converts the DC power of the DC bus 101 into AC power of a fixed frequency and voltage and flows the AC power to an outside from the connection terminal 115. Alternatively, the power converting unit 111 converts the AC power flowing from the connection terminal 115 into DC power, and flows the DC power to the DC bus 101.

The power converting unit 111 employs a configuration of an inverter circuit. More specifically, as illustrated in Fig. 3, the power converting unit 111 employs a configuration in which antiparallel circuits 111P each including a thyristor 111T and a feedback diode 111D are connected by way of a three-phase bridge. That is, one inverter circuit (power converting unit 111) includes the six antiparallel circuit 111P. A wire which is led from a node between the two antiparallel circuits 111P and connects this node and the connection terminal will be referred to as a branch line BL. A three-phase alternating current is used, and therefore one leg includes the three branch lines BL in this case. In this regard, a three-phase inverter circuit is used since the three-phase alternating current is used. However, a single-phase inverter circuit may be used depending on cases.

The switch 113 is disposed between the power converting unit 111 and the connection terminal 115. By opening and closing this switch 113, the branch line BL is opened and closed. Thus, the DC bus 101 is isolated from or connected with the outside. The current sensor 112 and the voltage sensor 114 output detection values to the control unit 19 through the communication bus 102.

A case where the power converting unit is the inverter circuit and leg connection parties use alternating currents has been described above. However, there is also a case where a leg connection party uses a direct current similar to a battery 835 (e.g. the third leg 13 in Fig. 1 is connected to the battery 835). Power conversion in this case is DC-DC conversion. Hence, by providing an inverter circuit and a converter circuit in parallel in a power converting unit, an inverter circuit and a converter circuit may be separately used according to whether a connection party uses an alternating current or a direct current. Alternatively, a DC-DC conversion dedicated leg whose a power converting unit is a DC-DC converting unit may be provided. In addition, providing a power router which has AC-DC conversion dedicated legs and DC-DC conversion dedicated legs in combination also provides more advantages in terms of a size and cost than providing an inverter circuit and a converter circuit in parallel in each of all legs.

The second leg 12 includes a power converting unit 121, a current sensor 122, a switch 123 and a voltage sensor 124. The leg 12 is connected to, for example, a load 830 through a connection terminal 125. The power converting unit 121, the current sensor 122, the switch 123 and the voltage sensor 124 of the second leg 12 correspond to the power converting unit 111, the current sensor 112, the switch 113 and the voltage sensor 114 of the first leg 11, respectively. The connection terminal 125 connected with the second leg 12 corresponds to the connection terminal 115 connected with the first leg 11. The power converting unit 121 employs a configuration in which antiparallel circuits 121P each including a thyristor 121 T and a feedback diode 121 D are connected by way of a three-phase bridge. The thyristor 121T, the feedback diode 121D and the antiparallel circuit 121P correspond to the thyristor 111T, the feedback diode 111D and the antiparallel circuit 111P, respectively.

The third leg 13 includes a power converting unit 131, a current sensor 132, a switch 133 and a voltage sensor 134. The third leg 13 is connected to, for example, the battery 835 through a connection terminal 135. The power converting unit 131, the current sensor 132, the switch 133 and the voltage sensor 134 of the third leg 13 correspond to the power converting unit 111, the current sensor 112, the switch 113 and the voltage sensor 114 of the first leg 11, respectively. The connection terminal 135 connected with the third leg 13 corresponds to the connection terminal 115 connected with the first leg 11. The power converting unit 131 employs a configuration in which antiparallel circuits 131 P each including a thyristor T and a feedback diode 131D are connected by way of a three-phase bridge. The thyristor 131T, the feedback diode 131D and the antiparallel 131P correspond to the thyristor 111T, the feedback diode 111D and the antiparallel circuit 111P, respectively. In this regard, for simplification of the drawings, the internal structure of the third leg 13 is not illustrated in Figs. 2 and 3.

The fourth leg 14 includes a power converting unit 141, a current sensor 142, a switch 143 and a voltage sensor 144. The fourth leg 14 is connected to, for example, another power cell through a connection terminal 145. The power converting unit 141, the current sensor 142, the switch 143 and the voltage sensor 144 of the fourth leg 14 correspond to the power converting unit 111, the current sensor 112, the switch 113 and the voltage sensor 114 of the first leg 11, respectively. The connection terminal 145 connected with the fourth leg 14 corresponds to the connection terminal 115 connected with the first leg 11. The power converting unit 141 employs a configuration in which antiparallel circuits 141P each including a thyristor 141T and a feedback diode 141D are connected by way of a three-phase bridge. The thyristor 141T, the feedback diode 141D and the antiparallel circuit 141 P correspond to the thyristor 111T, the feedback diode 111 D and the antiparallel circuit 111P, respectively. In this regard, for simplification of the drawings, the internal structure of the fourth leg 14 is not illustrated in Figs. 2 and 3.

The control unit 19 receives a control instruction 52 from the external management server 850 through a communication network 851. The control instruction 52 includes information for instructing an operation of each leg of the power router 100. In addition, the operation instruction of each leg includes, for example, specifying power feeding/power reception, specifying an operation mode and specifying power to be fed or received. More specifically, the control unit 19 monitors the voltage V₁₀₁ of the DC bus 101 through a voltage sensor 103, and controls a power direction, a frequency of AC power and the like. That is, the control unit 19 controls switching of the thyristors 111T, 121T and 131T and opening/closing of the switches 113, 123, 133 and 143 through the communication bus 102.

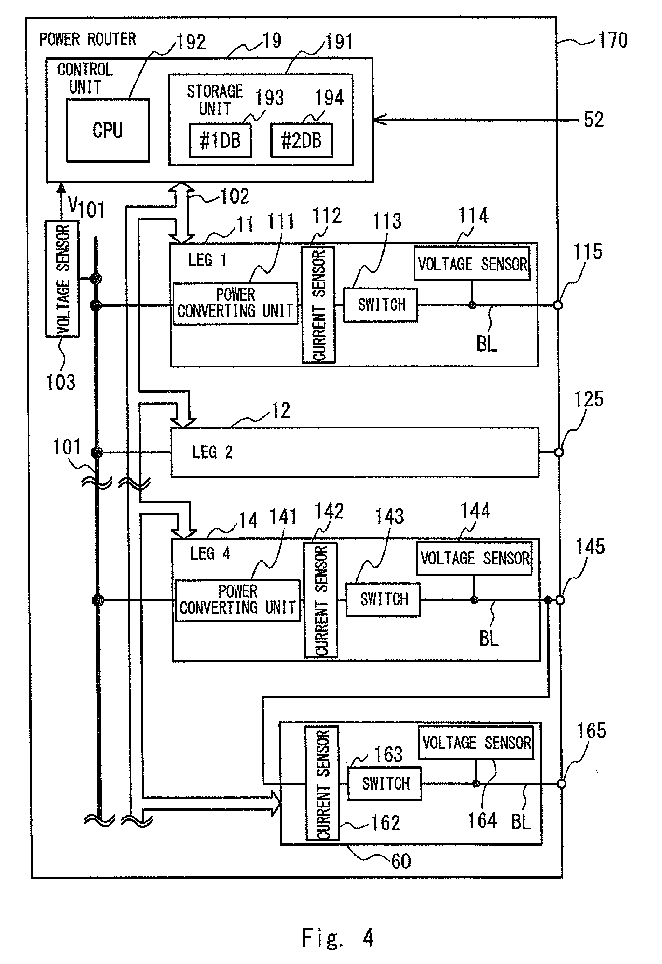

In addition, the leg having the power converting unit has been described above. However, it is also possible to provide a leg without a power converting unit. Hereinafter, the leg without the power converting unit will be temporarily referred to as an AC (Alternating Current) through leg 60. Fig. 4 is a block diagram illustrating a configuration example of a power router 170 including the AC through leg 60. The power router 170 employing a configuration provided by adding the AC through leg 60 to the power router 100 will be described. In addition, for simplification of the drawings, the third leg 13 is not illustrated in Fig. 4.

The AC through leg 60 includes a current sensor 162, a switch 163 and a voltage sensor 164. The AC through leg 60 is connected to, for example, another power cell through a connection terminal 165. A branch line BL of the AC through leg 60 is connected to the branch line BL of another leg having the power converting unit through the switch 163. That is, the connection terminal 165 connected with the AC through leg 60 is connected to a connection terminal connected with another leg including the power converting unit. Fig. 4 illustrates that, for example, the connection terminal 165 connected with the AC through leg 60 is connected to the connection terminal 145 connected with the fourth leg 14. Only the switch 163 is provided between the connection terminal 165 of the AC through leg 60 and the connection terminal 145 connected with the fourth leg 14, and the AC through leg 60 does not include a power converter. Hence, power is conducted without being converted at all between the connection terminal 165 connected with the AC through leg 60 and the connection terminal 145 connected with the fourth leg 14. This is because the leg without a power converter is referred to as an AC through leg.

The control unit 19 includes a storage unit 191 and a CPU 192. The storage unit 191 corresponds to first storage means. The CPU 192 corresponds to second arithmetic operation means. The storage unit 191 holds the control instruction 52 from the management server 850, in a control instruction database 193 (which is a first database and indicated as #1DB in the drawings). The storage unit 191 holds the control instruction database 193 and, in addition to, a leg identification information database 194 (which is a second database and is indicated as #2DB) for identifying each of the first leg 11 to the fourth leg 14. The storage unit 191 can realize various storage units such as a flash memory. The leg identification information database 194 is information such as IP addresses, URLs and URIs allocated to specify each of the first leg 11 to the fourth leg 14.

The CPU 192 reads the control instruction database 193 from the storage unit 191, and recognizes a leg (referred to as a specified leg) specified by the control instruction database 193. Further, the CPU 192 refers to the leg identification information database 194 of the storage unit 191, and reads information (e.g. an IP address) corresponding to the specified leg. By this means, the CPU 192 can output an operation instruction corresponding to the specified leg.

When, for example, the first leg 11 is specified referring to the control instruction database 193, the CPU 192 reads the IP address corresponding to the first leg 11, from the leg identification information database 194. Further, the CPU 192 outputs an operation instruction to the first leg 11 using the read IP address. Consequently, the CPU 192 can cause, for example, the first leg 11 to perform a power receiving operation or a power feeding operation, and specifies an operation mode (an operation mode will be described) or specifies power to be fed or received.

The power router includes means for specifying a leg specified from a plurality of legs according to a control instruction and outputting an operation instruction to the specified leg to realize a control instruction of the management server 850. More specifically, the power router 100 receives the control instruction 52 from the management server 850 through the control unit 19. The received control instruction 52 is stored as the control instruction database 193 in the storage unit 191 of the control unit 19, and is read by the CPU 192. The CPU 192 can more specifically specify a leg to which an operation instruction is outputted, by cross-checking the control instruction database 193 and the leg identification information database 194. Further, the CPU 192 can accurately output an operation instruction to an operation instruction target leg.

Consequently, according to this configuration, it is possible to more specifically realize a power router which can cause a desired leg provided inside to perform a desired operation based on the control instruction 52 from the management server 850.

### Second Embodiment

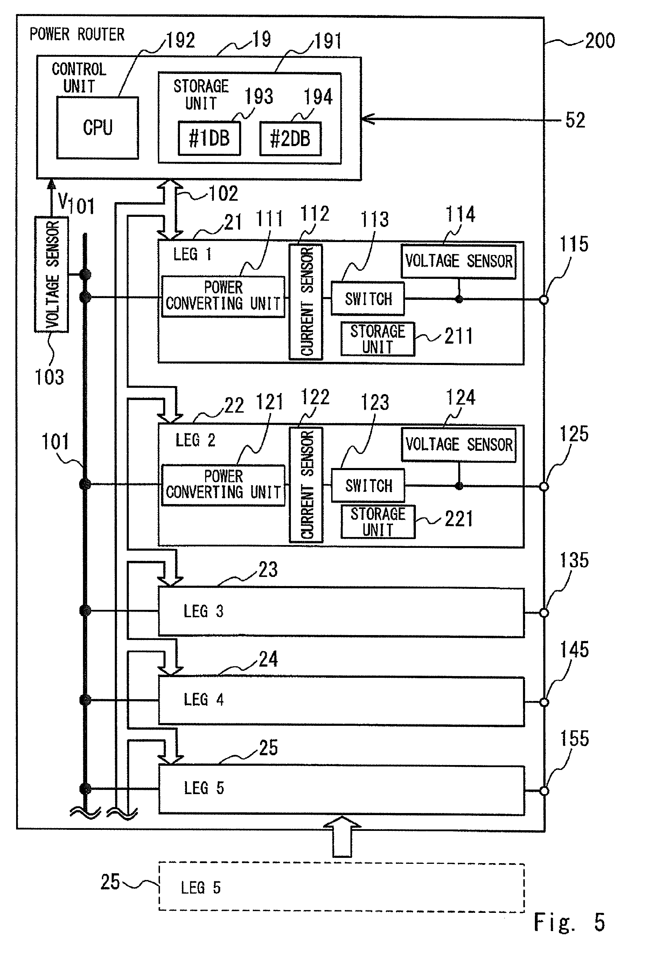

Next, a power router 200 according to the second embodiment will be described. The power router 200 is a modified example of a power router 100. Fig. 5 is a block diagram illustrating a configuration of the power router 200. The power router 200 has a first leg 21 to a fourth leg 24. The first leg 21 to the fourth leg 24 employ a configuration provided by adding storage units 221, 221, 231 and 241, to a first leg 11 to a fourth leg 14 of the power router 100. In this regard, for simplification of the drawings, the internal structures of the third legs 23 and the fourth leg 25 are not illustrated in Fig. 5.

A case where a fifth leg 25 is additionally mounted on the power router 200 will be described in the present embodiment. The power router 200 can automatically recognize that the fifth leg 25 has been added, and can make an initial setting of causing the fifth leg 25 to transition to an operable state.

The fifth leg 25 employs the same configuration as those of the first leg 21 to the fourth leg 24. The fifth leg 25 includes a power converting unit 151, a current sensor 152, a switch 153 and a voltage sensor 154. The fifth leg 25 is connected to, for example, another power cell through a connection terminal 155. The power converting unit 151, the current sensor 152, the switch 153, the voltage sensor 154 and a storage unit 251 of the fifth leg 25 correspond to the power converting unit 111, the current sensor 112, the switch 113, the voltage sensor 114 and the storage unit 211 of the first leg 21, respectively. The connection terminal 155 connected with the fifth leg 25 corresponds to the connection terminal 115 connected with the first leg 21. In this regard, for simplification of the drawings, the internal structure of the fifth leg 25 is not illustrated in Fig. 5.

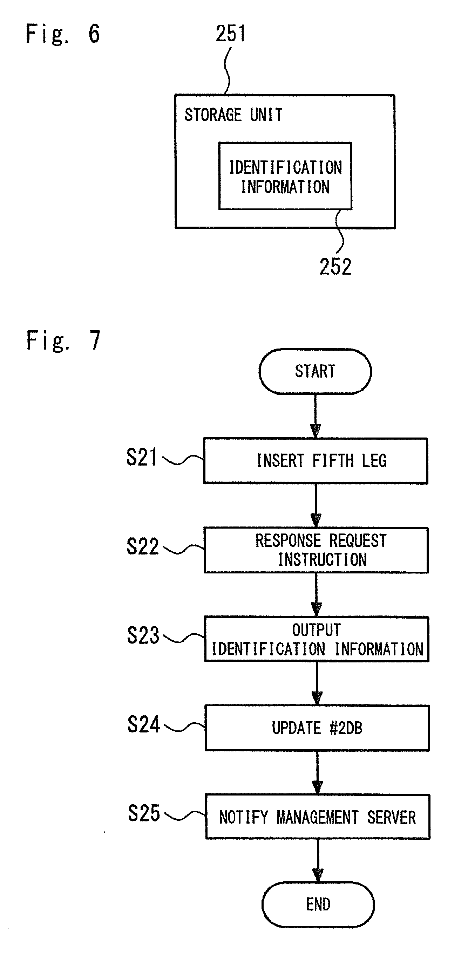

The storage units 211, 221, 231, 241 and 251 hold in advance pieces of identification information (e.g. IP addresses) 221, 222, 232, 242 and 252 for identifying the first leg 21 to the fifth leg 25, respectively. The storage units 211, 221, 231, 241 and 251 correspond to second storage means. The storage units 211, 221, 231, 241 and 251 employ the same configuration. Hereinafter, the storage unit 251 will be typically described. Fig. 6 is a block diagram schematically illustrating the configuration of the storage unit 251. The storage unit 251 includes the identification information 252.

Fig. 7 is a flowchart illustrating a plug-and-play operation of the power router 200.

### (step S21)

First, a user or the like inserts the new fifth leg 25 in the power router 200.

### (step S22)

The control unit 19 outputs a response request instruction to each leg through a communication bus 102. In addition, a control unit 19 outputs a response request instruction cyclically (e.g. every several second).

### (step S23)

When receiving the response request instruction, the fifth leg 25 outputs the identification information 252 of the fifth leg 25 such as an IP address from the storage unit 251, to a CPU 192 of the control unit 19 through the communication bus 102.

### (step S24)

The CPU 192 embeds the identification information 252 received from the fifth leg 25, in a leg identification information database 194 (which is a second database and is indicated as #2DB in Figs. 5 and 7), and stores the identification information 252 in the storage unit 191. That is, the CPU 192 performs an updating operation of adding the identification information 252 received from the fifth leg 25, to the leg identification information database 194. Consequently, the CPU 192 can recognize that a newly inserted leg is the fifth leg 25.

### (step S25)

Subsequently, the control unit 19 notifies an external management server 850 of that the fifth leg 25 has been newly embedded and can be used, through a communication network 851. Consequently, the management server 850 can use the fifth leg 25 as means for power interchange.

As described above, when a new leg is added, the power router 200 can receive identification information from the added leg. As a result, the power router 200 can identify the newly added leg. Consequently, the power router 200 can output a necessary operation instruction to the added leg, and control the leg.

### Third Embodiment

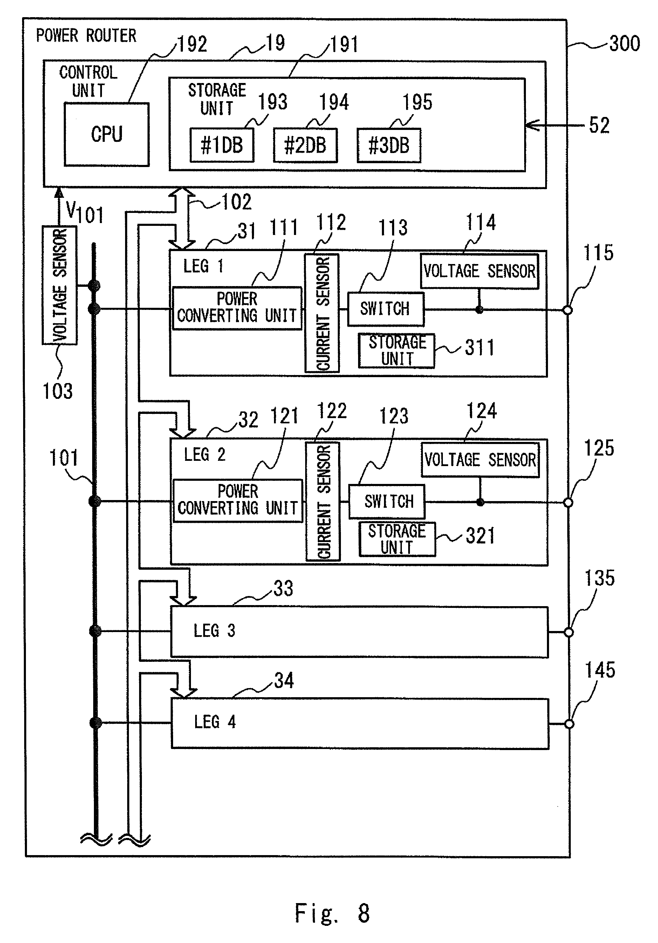

Next, a power router 300 according to the third embodiment will be described. The power router 300 is a modified example of a power router 200. Fig. 8 is a block diagram illustrating a configuration of the power router 300. The power router 300 has a first leg 31 to a fourth leg 34. The first leg 31 to the fourth leg 34 employ configurations provided by replacing storage units 211, 221, 231 and 241 of respective legs of the power router 200, with storage units 311, 321, 331 and 341, respectively. In this regard, for simplification of the drawings, the internal structures of the third leg 33 and the fourth leg 34 are not illustrated in Fig. 8.

In the present embodiment, a storage unit 191 holds a control instruction database 193 and a leg identification information database 194, and, in addition, an operation performance database 195 (which is a third database and is indicated as #3DB in Fig. 8).

In the present embodiment, the power router 300 has a function of monitoring each leg state, and determining whether or not each leg can execute a control instruction 52 from a management server 850 (referred to as request acceptability determination below).

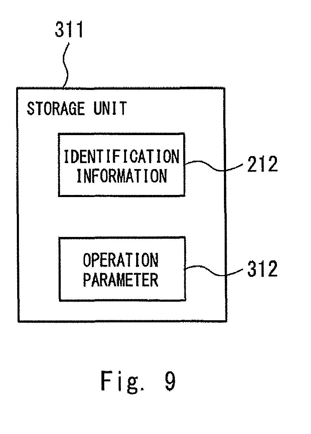

The storage units 311, 321, 331 and 341 hold in advance identification information and, in addition, operation parameters 312, 322, 332 and 342 of the first leg 31 to the fourth leg 34. The storage units 311, 321, 331 and 341 employ the same configuration. The storage units 311, 321, 331 and 341 correspond to second storage means. Hereinafter, the storage unit 311 will be typically described. Fig. 9 is a block diagram schematically illustrating the configuration of the storage unit 311. The storage unit 311 includes the identification information 212 and the operation parameter 312. The operation parameter described herein refers to a parameter for calculating maximum/minimum voltage, current and power, and regulation (so-called ramp rate) tolerances of a current/voltage in case of an alternating current and a direct current of each leg.

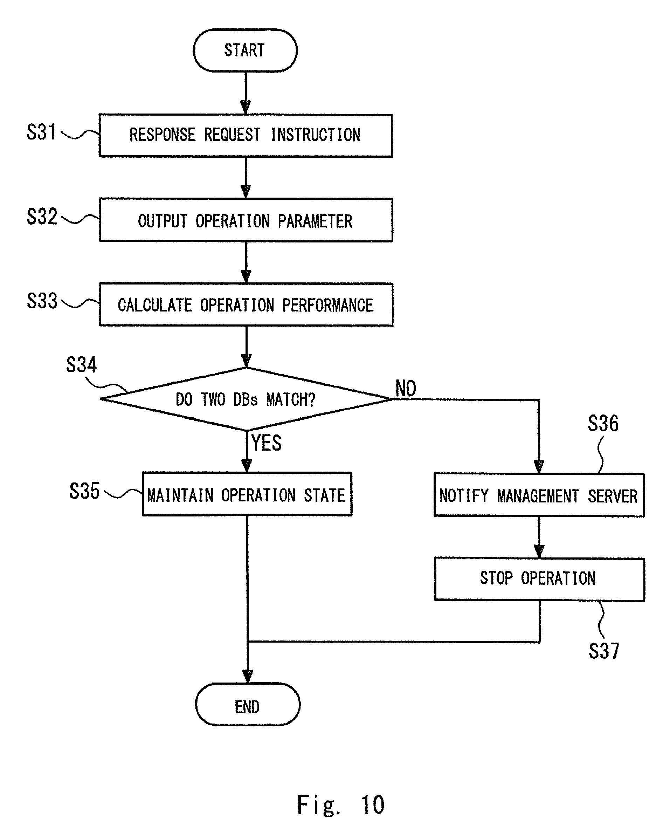

Fig. 10 is a flowchart illustrating an operation of monitoring each leg of the power router 300.

### (step S31)

A control unit 19 outputs a response request instruction to each leg. In addition, the control unit 19 outputs a response request instruction cyclically (e.g. every several second). By this means, the control unit 19 monitors each leg in the power router 300.

### (step S32)

When receiving response request instructions, the first leg 31 to the fourth leg 34 output the operation parameters 312 to 342 from the storage unit 311, 321, 331 and 341 to a CPU 192.

### (step S33)

The CPU 192 calculates operation performance of each leg such as a maximum/minimum voltage, current and power, and regulation (so-called ramp rate) tolerances of a current/voltage in case of an alternating current and a direct current, based on the operation parameter received from each leg and a voltage of a DC bus 101. The CPU 192 stores the calculated operation performance of each leg as the operation performance database 195 in the storage unit 191.

### (step S34: Request Acceptability Determination)

The CPU 192 cross-matches the operation performance database 195 and the control instruction database 193 per leg.

### (step S35)

When the operation state specified referring to the control instruction database 193 of each leg is within operation performance indicated by the operation performance database 195, the CPU 192 maintains the operation state of each leg and finishes the processing.

### (step S36)

When the operation state specified referring to the control instruction database 193 of a cross-check target leg exceeds the operation performance indicated by the operation performance database 195, the CPU 192 notifies the management server 850 of that there is the leg exceeding the operation performance (request unavailability notice).

### (step S37)

The CPU 192 outputs an operation stop instruction to the leg which exceeds the operation performance, and causes the leg to stop the operation. Subsequently, the CPU 192 finishes the processing.

When the power router 300 includes a display device such as a liquid crystal panel or LEDs (Light Emitting Diodes), the CPU 192 may display an alarm indicating a leg which exceeds operation performance. In addition, the alarm is not limited to an indication, and may use a sound such as buzzer sound.

As described above, according to the configuration, the control unit 19 determines whether or not each leg can execute the control instruction 52 from the management server 850 using a response request instruction. As a result, it is possible to prevent each leg from performing an operation which exceeds operation performance, and prevent failure caused by an overload.

Further, by outputting a request unavailability notice to the management server 850, the management server 850 can take corrective measures in order to continue power interchange by, for example, outputting a new control instruction which can be executed.

In addition, the plug-and-play operation described in the second embodiment and a request acceptability determination according to the present embodiment may be independently carried out according to a response request instruction, or may be simultaneously carried out. In this regard, the request acceptability determination is desirably performed after the plug-and-play operation in order to calculate operation performance of a newly added leg.

### Fourth Embodiment

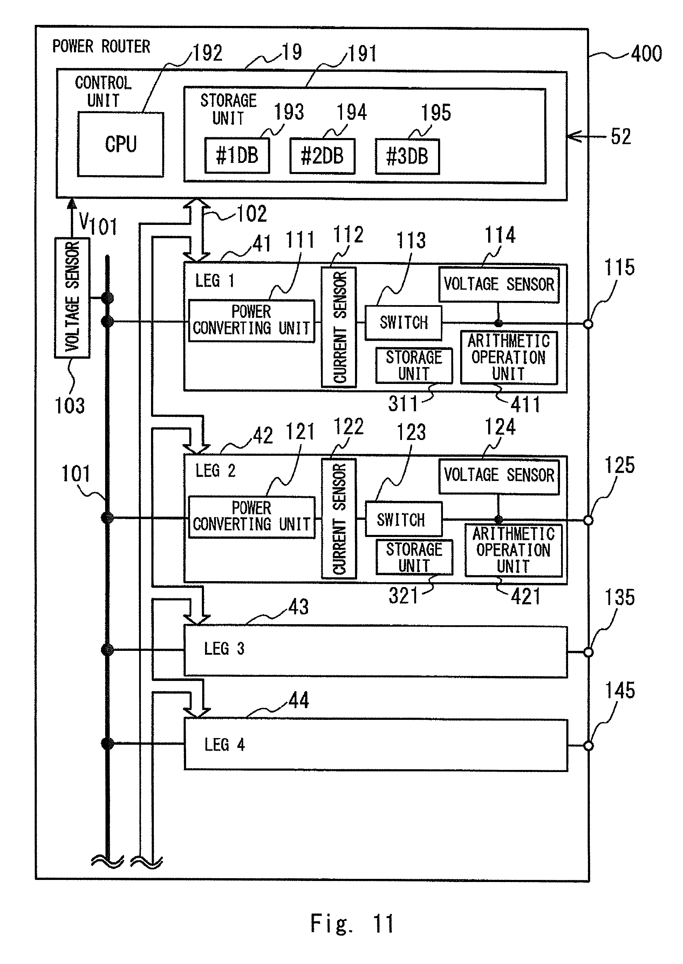

Next, a power router 400 according to the fourth embodiment will be described. The power router 400 is a modified example of a power router 300. Fig. 11 is a block diagram illustrating a configuration of the power router 400. The power router 400 has a first leg 41 to a fourth leg 44. The first leg 41 to the fourth leg 44 employ configurations provided by adding arithmetic operation units 411, 421, 431 and 441, to a first leg 31 to a fourth leg 34 of the power router 300, respectively. The arithmetic operation units 411, 421, 431 and 441 correspond to second arithmetic means. In this regard, for simplification of the drawings, the internal structures of the third leg 43 and the fourth leg 44 are not illustrated in Fig. 11.

In the present embodiment, similar to the power router 300, the power router 400 has a function of monitoring each leg state, and determining whether or not each leg can execute a control instruction 52 from a management server 850 (referred to as request acceptability determination below).

A control unit 19 calculates operation performance of each leg in the third embodiment. However, in the power router 400 according to the present embodiment, the arithmetic operation units 411, 421, 431 and 441 calculate operation performance of each leg.

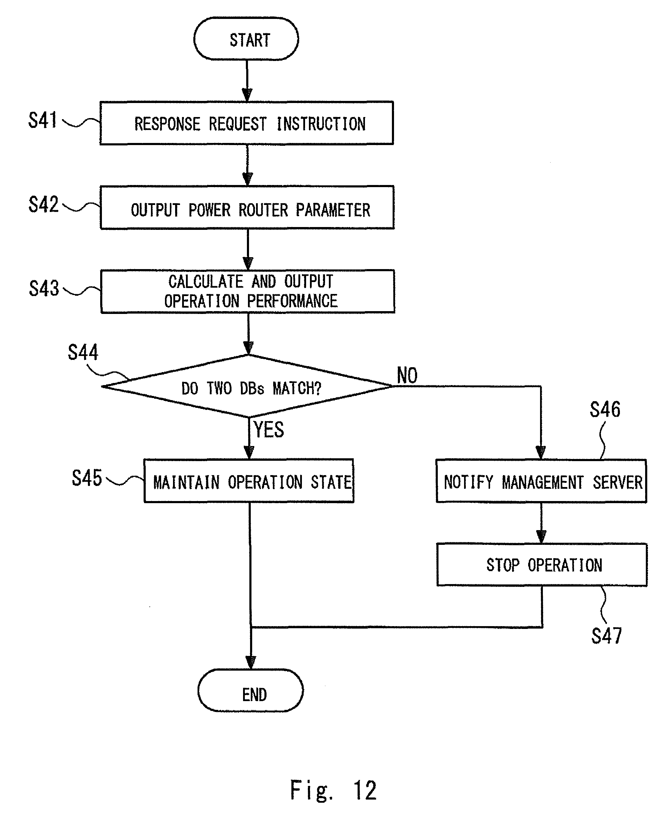

Fig. 12 is a flowchart illustrating an operation of monitoring each leg of the power router 400.

### (step S41)

The control unit 19 outputs a response request instruction to each leg. In addition, the control unit 19 outputs a response request instruction cyclically (e.g. every several second). Thus, the control unit 19 monitors each leg in the power router 400.

### (step S42)

Next, the control unit 19 outputs a power router parameter to each leg. The power router parameter includes, for example, a voltage V₁₀₁ of a DC bus 101.

### (step S43)

The arithmetic operation units 411, 421, 431 and 441 calculate operation performance of each leg such as maximum/minimum voltages, currents and power, and regulation (so-called ramp rate) tolerances of a current/voltage in case of an alternating current and a direct current, based on operation parameters for calculating maximum/the minimum voltages, currents and power, and the regulation (so-called ramp rate) tolerances of the current/voltage in case of an alternating current and a direct current of each leg and the power router parameter (the voltage V₁₀₁ of the DC bus 101). Further, the arithmetic operation units 411, 421, 431 and 441 store the calculated operation performance of each leg as an operation performance database 195 in a storage unit 191.

### (steps S44 to S47)

Steps S44 to S47 are the same as steps S34 to S37 in Fig. 10, respectively, and therefore will not be described.

As described above, according to the configuration, the control unit 19 determines whether or not each leg can execute the control instruction 52 from the management server 850 using a response request instruction. As a result, it is possible to prevent each leg from performing an operation which exceeds operation performance, and prevent failure caused by an overload.

In addition, a plug-and-play operation described in the second embodiment and request acceptability determination according to the present embodiment may be independently carried out according to a response request instruction, or may be simultaneously carried out. In this regard, the request acceptability determination is desirably performed after the plug-and-play operation in order to calculate operation performance of a newly added leg.

Further, by outputting a request unavailability notice to the management server 850, the management server 850 can take corrective measures in order to continue power interchange by, for example, outputting a new control instruction which can be executed.

### Fifth Embodiment

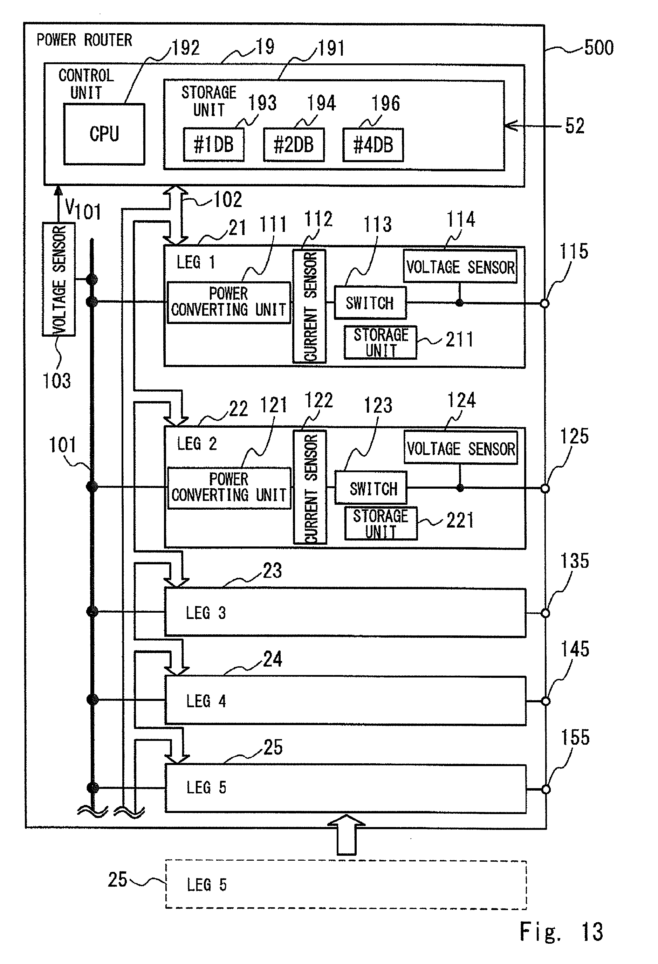

Next, a power router 500 according to the fifth embodiment will be described. The power router 500 is a modified example of a power router 200. Fig. 13 is a block diagram illustrating a configuration of the power router 500. The power router 500 has a first leg 21 to a fourth leg 24 similar to the power router 200. In this regard, for simplification of the drawings, the internal structures of the third leg 23 to the fifth leg 25 are not illustrated in Fig. 13.

In the present embodiment, a storage unit 191 holds a control instruction database 193 and a leg identification information database 194 and, in addition, a compatibility information database 196 (which is a fourth database and is indicated as #4DB in Fig. 13).

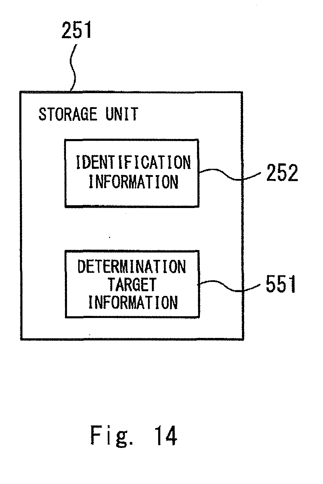

Storage units 211, 221, 231, 241 and 251 hold in advance identification information and, in addition, pieces of determination target information 511, 521, 531, 541 and 551. The pieces of determination target information 511, 521, 531, 541 and 551 are the same information and will be described in detail later. Hereinafter, the storage unit 251 will be typically described. Fig. 14 is a block diagram schematically illustrating a configuration of the storage unit 251. The storage unit 251 includes identification information 252 and the determination target information 551.

A case where a fifth leg 25 is additionally mounted in the power router 200 similar to the second embodiment will be described in the present embodiment. The power router 500 can automatically recognize that the fifth leg 25 has been added, and make initial settings of causing the fifth leg 25 to transition to an operable state. Further, the power router 500 has a function of determining whether or not the added fifth leg 25 is compatible with the power router 500 (compatibility determination) upon a plug-and-play operation.

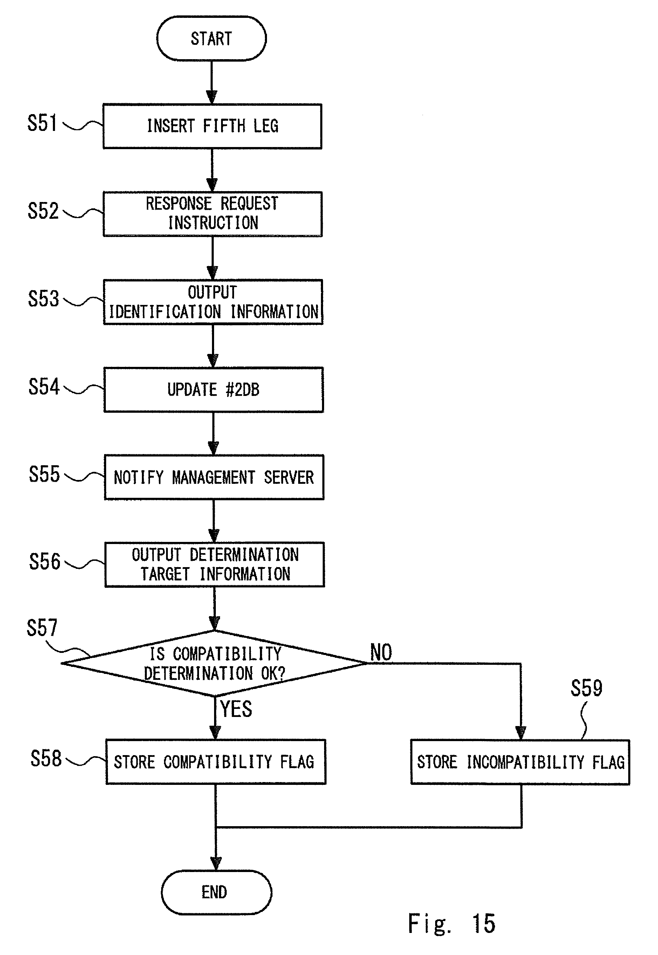

Fig. 15 is a flowchart illustrating the plug-and-play operation and the compatibility determination operation of the power router 500.

### (steps S51 to S55)

Steps S51 to S55 are the same as steps S21 to 25 in Fig. 7, respectively, and therefore will not be described. First, a user or the like inserts the new fifth leg 25 in the power router 500.

### (step S56)

Further, the fifth leg 25 outputs the determination target information 551 to a CPU 192 of a control unit 19 through a communication bus 102. The determination target information 551 is information allocated in advance according to quality or performance indicating an attribute of a power router, and includes, for example, authentication information or a region code of the power router. The authentication information is information indicating whether or not a power router to be newly added is authenticated by a proper certification organization. The power router contributes to power supply. Therefore, the power router is required to be able to stably feed and receive power and satisfy safety standards. Hence, by introducing authentication information, it is possible to distinguish between legal products and illegal products, and prevent power routers which do not satisfy required performance from being mixed in a power network system. The region code is information indicating a region in which a power router can be used. The power network system differs in voltages, frequencies and the like in some cases when regions such as countries are different. Therefore, power routers are designed according to regions in which the power routers are used in some cases. Hence, there are some cases where power routers for a specific region are not compatible with power network systems of other regions. Consequently, by using region codes, it is possible to connect only power routers which are compatible with conditions of each region, to a power network system.

### (step S57: Compatibility Determination)

The CPU 192 receives the determination target information 551. The control instruction database 193 includes compatibility determination information 552 which is a comparison target of the determination target information 551. The CPU 192 reads the compatibility determination information 552 from the storage unit 191 to compare with the determination target information 551.

### (step S58)

When the determination target information 551 matches with the compatibility determination information 552 (e.g. authentication information or a region code matches with the compatibility determination information 552), the CPU 192 determines that the fifth leg 25 is compatible with the power router 500, and stores a compatibility flag of the fifth leg 25 in the compatibility information database 196 of the storage unit 191. The CPU 192 can control only legs whose compatibility flags exist.

### (step S59)

When the determination target information 551 does not match with the compatibility determination information 552 (e.g. authentication information or a region code does not match with the compatibility determination information 552), the CPU 192 determines that the fifth leg 25 is not compatible with the power router 500, and stores an incompatibility flag of the fifth leg 25 in the compatibility information database 196 of the storage unit 191. In this case, the CPU 192 places the fifth leg 25 in an unusable state irrespectively of contents of a control instruction 52. The unusable state described herein means that a main power supply of the fifth leg 25 is not turned on or the fifth leg 25 is regarded as if the fifth leg 25 did not exist. In addition, the control unit 19 can also notify an external management server 850 of that the fifth leg 25 is incompatible, through a communication network 851. In addition, the CPU 192 may update to "0" all of values of operation performances such as maximum/minimum voltage, current and power, and regulation (so-called ramp rate) tolerances of a current/voltage of the fifth leg 25 in an operation performance database 195 when determining that the fifth leg 25 is incompatible. Consequently, as described in the third and fourth embodiments, the fifth leg 25 does not receive the control instruction 52 from the management server 850, and can be eventually placed in an unusable state.

When the fifth leg 25 is compatible with the power router 500, the control unit 19 may notify the external management server 850 of that the fifth leg 25 has been embedded and can be used, through the communication network 851. Consequently, the management server 850 can use the fifth leg 25 as means for power interchange.

Further, when the power router 500 includes a display device such as a liquid crystal panel or LEDs (Light Emitting Diodes), the CPU 192 may display an alarm indicating that the fifth leg 25 is incompatible. In addition, the alarm is not limited to an indication, and may use a sound such as buzzer sound.

As described above, when a new leg is added, the power router 500 can receive identification information from the added leg. As a result, the power router 500 can identify the newly added leg. Consequently, the power router 500 can output a necessary operation instruction to the added leg, and control the leg.

Further, the power router 500 automatically determines whether or not the newly added leg is compatible with the power router 500. Consequently, it is possible to detect newly added incompatible legs, and prevent error operations of the legs in advance.

### Sixth Embodiment

Next, a power router 600 according to the sixth embodiment will be described. The power router 600 is a modified example of a power router 100. The power router 600 employs the same configuration as that of the power router 100. A case where a control instruction 52 includes specifying an operation mode of each leg will be described in the present embodiment.

First, the operation action mode will be described. A configuration where a first leg 11 to a fourth leg 15 include power converting units 111, 121, 131, 141 and 151, and a control unit 19 controls switching operations of thyristors in the power converting units has been described above. In this regard, the power router 100 plays an important role of mutually connecting a core system 811, loads 830, distributed power supplies and power cells in a node of a power network system 810. In this regard, connection terminals 115, 125, 135 and 145 of the first leg 11 to the fourth leg 14 are connected to the core system 811, the loads 830, the distributed power supplies and power routers of other power cells, respectively. The inventors of the present invention have found that roles of the first leg 11 to the fourth leg 14 differ per connection party, and, unless the first leg 11 to the fourth leg 14 do not perform adequate operations corresponding to the roles, the power routers do not work. The inventors of the present invention have changed how legs are operated per connection party while the leg structures are the same. How a leg is operated will be referred to as an operation mode. The inventors of the present invention have prepared three types of leg operation modes, and switched between modes per connection party.
The leg operation modes include
a master mode,
an autonomous mode, and
a specified power feeding/receiving mode.

These leg operation modes will be described in order.

### (Master Mode)

The master mode is an operation mode in case where a leg is connected to a stable power supply source such as a system, and is an operation mode for maintaining a voltage of a DC bus 101. Fig. 1 illustrates an example where the connection terminal 115 of the first leg 11 is connected to the core system 811. In case of Fig. 1, the first leg 11 is controlled to operate in the master mode and play a role of maintaining the voltage of the DC bus 101. The rest of the second leg 12 to the fourth leg 14 are connected to the DC bus 101, and therefore power flows to the DC bus 101 from the second leg 12 to the fourth leg 14 and power flows from the second leg 12 to the fourth leg 14, too. When power flows from the DC bus 101 and the voltage of the DC bus 101 lowers from a voltage rating, the first leg 11 in the master mode compensates for the amount of power which has flowed out and become insufficient, from a connection party (the core system 811 in this case). Further, when power flows in the DC bus 101 and the voltage of the DC bus 101 rises from the voltage rating, the amount of power which has flowed in and become excessive is pooled to the connection party (the core system 811 in this case). Thus, the first leg 11 in the master mode maintains the voltage of the DC bus 101. Hence, at least one leg in one power router needs to be operated in the master mode. Otherwise, the voltage of the DC bus 101 is not maintained at a fixed voltage. By contrast with this, two or more legs in one power router may be operated in the master mode. However, the number of legs in the master mode is preferably one in one power router. Further, the leg in the master mode may be connected to a core system and, in addition, a distributed power supply (including a battery, too) on which a self-excited inverter is mounted. In this regard, the distributed power supply on which a separately-excited inverter is mounted cannot be connected to the leg in the master mode.

A leg to be operated in the master mode will be also referred to as a master leg below.

Operation control of the master leg will be described. The master leg is activated as follows. First, the switch 113 is placed in an open (isolated) state. The connection terminal 115 is connected to a connection party in this state. In this regard, the connection party is the core system 811. A voltage sensor 114 measures a voltage of a connection destination system, and calculates the amplitude, the frequency and the phase of the voltage of the system using PLL (Phase-Locked-Loop). Subsequently, an output of the power converting unit 111 is adjusted such that the voltage of the calculated amplitude, frequency and phase is outputted from the power converting unit 111. That is, an on/off pattern of a thyristor 111T is determined. When this output becomes stable, the switch 113 is powered to connect the power converting unit 111 and the core system 811. At this point of time, the output of the power converting unit 111 and the voltage of the core system 811 are synchronized, and therefore a current does not flow.

Operation control while the master leg is operated will be described. The voltage of the DC bus 101 will be measured by a voltage sensor 103. When the voltage of the DC bus 101 is higher than a predetermined rating bus voltage, the power converting unit 111 is controlled to feed power from the master leg (first leg 11) to the system. (At least one of the amplitude and the phase of the voltage outputted from the power converting unit 111 is adjusted to feed power from the DC bus 101 to the core system 811 through the master leg (first leg 11).) In addition, the voltage rating of the DC bus 101 is set in advance.

Meanwhile, when the voltage of the DC bus 101 is lower than the predetermined rating bus voltage, the power converting unit 111 is controlled to enable this master leg (first leg 11) to receive power from the core system 811. (At least one of the amplitude and the phase of the voltage outputted from the power converting unit 111 is adjusted to feed power from the core system 811 to the DC bus 101 through the master leg (first leg 11).) It is understood that the master leg is operated in this way, so that it is possible to maintain the voltage of the DB bus 101 at the voltage rating determined in advance.

### (Autonomous Mode)

The autonomous mode is an operation mode of autonomously producing a voltage of an amplitude and a frequency specified by a management server 850, and feeding and receiving power to and from a connection party. For example, the autonomous mode is an operation mode for supplying power to the load 830 which consumes power. Alternatively, the autonomous mode is an operation mode for receiving power fed from a connection party as is. Fig. 1 illustrates an example where the connection terminal 125 of the second leg 12 is connected to the load 830. The second leg 12 is controlled to operate in the autonomous mode, and supplies power to the load 830. Further, there is also a case where, when a leg is connected with another power router similar to the fourth leg 14, the fourth leg 14 is operated in the autonomous mode as a mode for feeding power the amount of power requested by the another power router. Furthermore, there is also a case where, when a leg is connected with another power router similar to the fourth leg 14, the fourth leg 14 is operated in the autonomous mode as a mode for receiving power fed from the another power router. Still further, although not illustrated, when the second leg is connected to a power generation facility instead of the load 830, the second leg can also be operated in the autonomous mode. In this regard, a separately-excited inverter is mounted on the power generation facility in this case. The operation mode in case where power routers are connected will be described later.

A leg to be operated in the autonomous leg will be also referred to as an autonomous leg. One power route includes a plurality of autonomous legs.

Operation control of the autonomous leg will be described. First, a switch 123 is opened (isolated). The connection terminal 125 is connected to the load 830. The amplitude and the frequency of power (voltage) which needs to be supplied to the load 830 are instructed with respect to the power router 100 from the management server 850. Then, a control unit 19 causes the power converting unit 121 to output the power (voltage) of the instructed amplitude and frequency to the load 830. (That is, an on/off pattern of a thyristor 121T is determined.) When this output becomes stable, the switch 123 is powered on to connect the power converting unit 121 and the load 830. Then, when the load 830 consumes power, this amount of power starts flowing from the autonomous leg (second leg 12) to the load 830.

### (Specified Power Feeding/Receiving Mode)

The specified power feeding/receiving mode is an operation mode for interchanging the amount of power determined by way of specifying the power. That is, there are a case where specified power is fed to a connection party and a case where specified power is received from a connection party. In Fig. 1, the fourth leg 14 is connected with another power router. In such a case, a determined amount of power is interchanged from one of the fourth leg 14 and from the another power router to the other. Further, the third leg 13 is connected to a battery 835. In such a case, the determined amount of power is fed to the battery 835 to charge the battery 835. Further, a distributed power supply (including a battery, too) on which a self-excited inverter is mounted, and a specified power feeding/receiving leg may be connected. In this regard, a distributed power supply on which a separately-excited inverter is mounted, and a specified power feeding/receiving leg cannot be connected.

A leg to be operated in the specified power feeding/receiving mode will be referred to as a specified power feeding/powering leg. One power router includes a plurality of specified power feeding/receiving legs.

Operation control of the specified power feeding/receiving leg will be described. Control upon activation is basically the same as that of the master leg, and therefore will not be described.

Operation control performed when the specified power feeding/receiving leg is operated will be described. Reference numerals allocated to the third leg 13 will be used to describe the operation control. A voltage sensor 134 measures a voltage of a connection party system, and calculates the frequency and the phase of the voltage of the connection party using PLL (Phase-Locked-Loop). A target value of a current inputted and outputted to and from the power converting unit 131 is calculated based on a valid power value and an invalid power value specified by the management server 850, and the frequency and the phase of the voltage of the connection party. A current sensor 132 measures a current value of the current. The power converting unit 131 is adjusted to additionally output a current corresponding to a difference between the target value and the current value. (At least one of the amplitude and the phase of the voltage outputted from the power converting unit 131 is adjusted to flow desired power between the specified power feeding/receiving leg and the connection party.)

In view of the above, it is understood that three patterns of roles are fulfilled according to how operations of the first leg 11 to the fourth leg 14 employing the same configuration are controlled.

The power router 600 can operate each leg in the above three operation modes by referring to specified information of an operation mode included in the control instruction 52. Consequently, the power router 600 can cause each leg to adequately operate according to a role. In addition, an operation in case where a newly leg is added has been described in the second embodiment. However, for example, a shape of a leg may be varied according to a type of a mode of the leg when the leg is newly added, and a specific switch may be pushed upon insertion of the leg. Consequently, it is possible to automatically detect insertion of a new leg. It is also possible to detect insertion of a leg likewise when a leg mode is changed.

### Seventh Embodiment

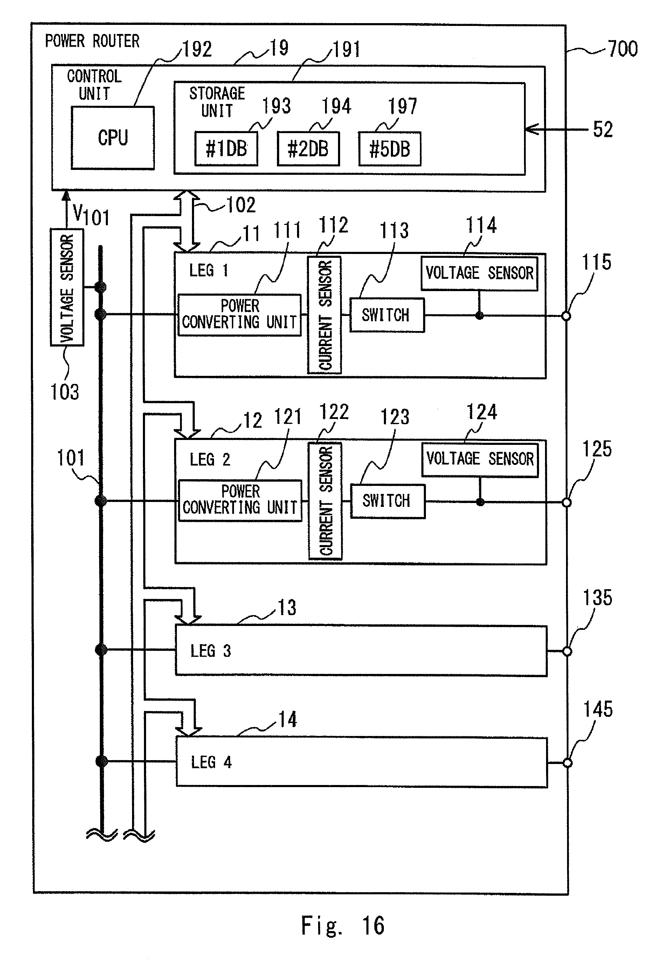

Next, a power router 700 according to the seventh embodiment will be described. The power router 700 is a modified example of a power router 100. Fig. 16 is a block diagram illustrating a configuration of the power router 700. In the present embodiment, a storage unit 191 holds a control instruction database 193 and a leg identification information database 194 and, in addition, a management information database 197 (which is a fifth database and is indicated as #5DB). In this regard, for simplification of the drawings, the internal structures of the third legs 13 and 14 are not illustrated in Fig. 16.

The management information database 197 includes, for example, operation history information (log data) in case where each leg operates based on a control instruction 52.

The log data includes, for example, feeding power, a feeding power voltage, a feeding power current, a power feeding time, received power, a received power voltage, a received power current and a power receiving time of each leg. That is, by referring to the log data, it is possible to learn an exchange of power of each leg and obtain a record of power interchange. In addition, by using the management information database 197, it is also possible to calculate selling power and purchasing power in a certain period. Consequently, it is also possible to provide a stepwise rate system which increases a power selling unit price and a power purchase unit price stepwise as selling power and purchase power increase.

Further, the operation history information includes a cumulative operation time of a power router. By using the cumulative operation time and performing management such as maintenance of power routers, it is possible to prevent failure in advance. Further, making a cumulative operation time of each leg of the power router 700 uniform as much as possible also provides an advantage of enabling collective maintenance.

According to the configuration, it is possible to learn a record of power interchange in which the power router 700 involves per leg, and make maintenance efficient using the management information database 197.

### Eighth Embodiment

Next, the eighth embodiment will be described. An example of a power network system constructed using one or a plurality of power routers will be described in the present embodiment. In addition, the power network system is constructed using power routers 1011 to 1014 in the present embodiment. However, the power routers according to the above first to eighth embodiments may be used for the power routers 1011 to 1014, respectively.

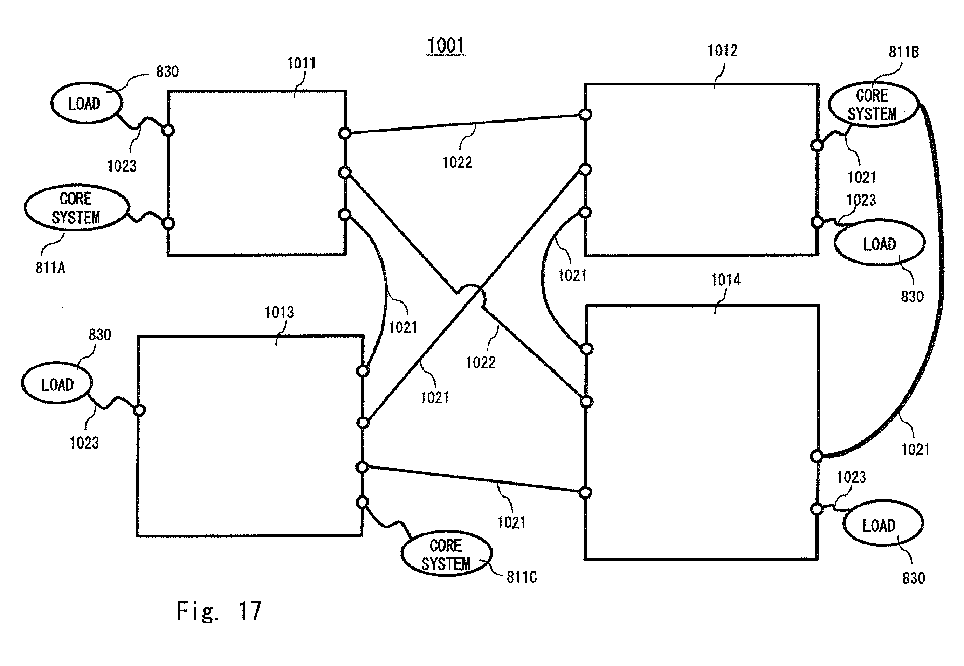

Fig. 17 is a block diagram schematically illustrating a configuration of a power network system 1001 which is an example of the power network system. Fig. 17 does not illustrate reference numerals of legs for simplification of the drawings. Further, white circles assigned to the power routers 1011 to 1014 indicate connection terminals of respective legs.

In this regard, connection lines which connect power routers and connection parties will be supplemented. When connection lines which connect power routes will be referred to electric feeder lines, the feeder lines may be part of a core system or may be separated from the core system. In Fig. 17, reference numeral 1021 will be assigned to electric feeder lines which are part of the core system, and reference numeral 1022 will be assigned to electric feeder lines which are separated from the core system. That is, a plurality of power routers may be connected to the core system. By connecting two or more power routers through the core system in this way, it is possible to interchange power between a plurality of power routers through the core system, and to enable the core system to compensate for the insufficient amount of power to be interchanged. Meanwhile, two or more power routers may be connected without the core system.

Further, when connection lines which connect power routers and the loads 830 (or distributed power supplies) will be referred to as power distribution lines 1023, the power distribution lines 1023 are separated from core systems 811A to 811 C. That is, the power distribution lines 1023 which connect the power routers and the loads 830 (or distributed power supplies) are not connected to the core systems 811 A to 811C.

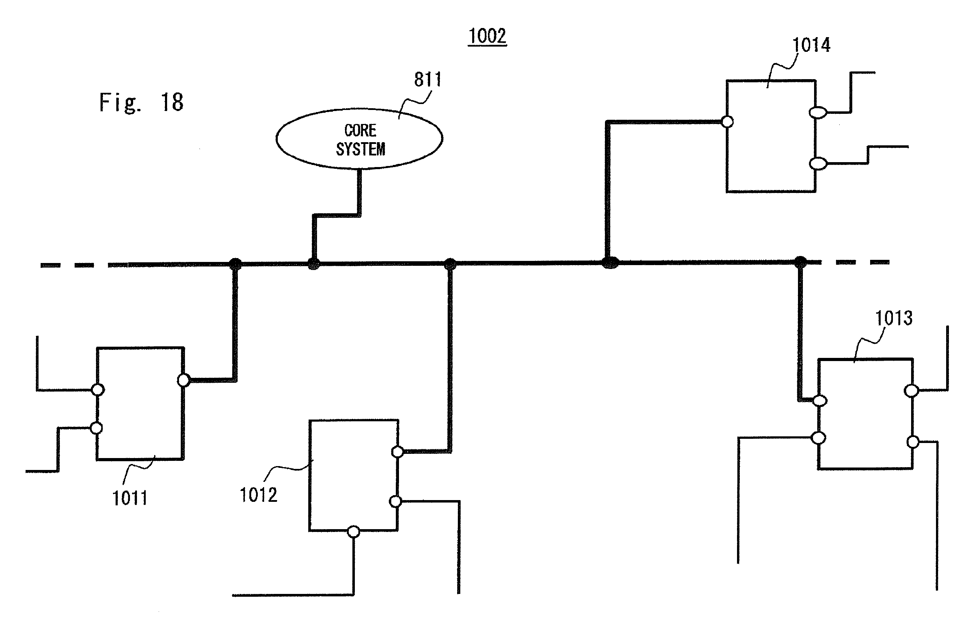

An example of another power network system will be described. Fig. 18 is a block diagram schematically illustrating a configuration of a power network system 1002 which is an example of the power network system. Fig. 18 illustrates only the power routers 1011 to 1014 and the core system 811 for simplification of the drawings. Further, Fig. 18 illustrates connection lines as bold lines and power distribution lines as thin lines. As illustrated in Fig. 18, the power routers 1011 to 1014 may be connected by way of bus connection. An operation mode of each leg will not be described. However, naturally, the operation mode of each leg needs to be adequately selected by taking into account a power interchange direction and connection restriction described above. In addition, in Fig. 18, the core system 811 may be naturally replaced with a distributed power supply such as a battery or a power generation facility. That is, a plurality of power routers may be connected to distributed power supplies by way of bus connection.

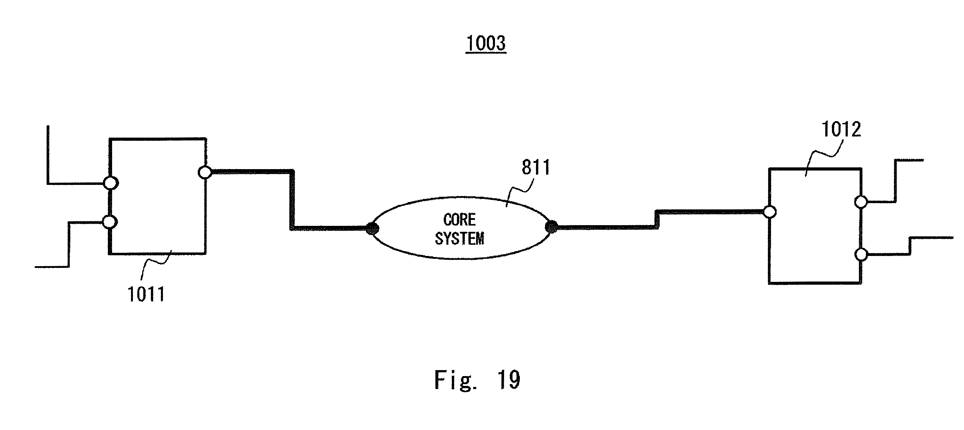

Further, an example of another power network system will be described. Fig. 19 is a block diagram schematically illustrating a configuration of a power network system 1003 which is an example of a power network system. Fig. 19 illustrates only the power routers 1011 and 1012 and the core system 811 for simplification of the drawings. Further, Fig. 19 illustrates connection lines as bold lines and power distribution lines as thin lines. As illustrated in Fig. 19, a configuration where the power routers 1011 and 1012 are connected to the core system 811 may be employed. In addition, in Fig. 19, the core system 811 may be replaced with a distributed power supply.

As described above, connection parties of power routers are a core system, distributed power supplies including batteries and power generation facilities and other power routes, and will be referred to as power systems in this description and the claims.

As described above, the power router according to the present embodiment can provide the following effect. That is, the power router according to the present embodiment can construct a power network system in which power cells are asynchronously connected with each other. Further, as described in the present embodiment, by operating legs in a power router according to a control instruction from a management server, it is possible to perform more specific operations such as power interchange in the power network system.

### Another Embodiment

In addition, the present invention is not limited to the above embodiments, and can be optionally changed without departing from the spirit of the present invention. For example, a control unit 19 has been described has a hardware configuration in the above embodiments. However, the present invention is not limited to this. For example, the control unit 19 can be configured by a computer and can realize arbitrary processing by causing a CPU (Central Processing Unit) to execute a computer program. Further, a control device is embedded in a power converting unit of a leg to configure the control device as, for example, a dynamic reconfigurable logic (FPGA: Field Programmable Gate Array). Furthermore, a control program of the FPGA is changed to contents which are compatible with a mode of the leg to cause an operation. Thus, it is possible to perform control corresponding to this operation mode by rewriting the PFGA according to a leg type or operation and, consequently, reduce hardware capacity and cost.

Further, the above program can be supplied to the computer by being stored using various types of non-transitory computer readable media. The non-transitory computer readable media include various types of tangible storage media. The non-transitory computer readable media include, for example, magnetic recording media (e.g. flexible disks, magnetic tapes and hard disk drives), magnetooptical recording media (e.g. magnetooptical disks), CD-ROMs (Read Only Memory), CD-Rs, CD-R/Ws, and semiconductor memories (e.g. mask ROMs, PROMs (Programmable ROM), EPROMs (Erasable PROM), flash ROMs and RAMs (Random Access Memory)). Further, the program may be supplied to the computer using various types of transitory computer readable media. The transitory computer readable media include, for example, electric signals, optical signals and electromagnetic waves. The transitory computer readable media can supply the program to the computer using wired communication channels such as electric wires and optical fibers or wireless communication channels.

The above embodiments can be optionally combined and carried out. For example, part or all of the second, third, fifth and seventh embodiments can be combined and carried out. In this regard, this does not prevent that the second, third, fifth and seventh embodiments can be independently carried out.

For example, part or all of the second, fourth, fifth and seventh embodiments can be combined and carried out. In this regard, this does not prevent that the second, third, fifth and seventh embodiments can be independently carried out.

For example, part or all of the third, fifth, sixth and seventh embodiments can be combined and carried out. In this regard, this does not prevent that the third, fifth, sixth and seventh embodiments can be independently carried out.

For example, part or all of the fourth, fifth, sixth and seventh embodiments can be combined and carried out. In this regard, this does not prevent that the third, fifth, sixth and seventh embodiments can be independently carried out.

Further, a power router which is realized by combining a plurality of above embodiments can be naturally applicable to an arbitrary power network system including power network systems 1001 to 1003.

Although the present invention has been described above with reference to the embodiments, the present invention is by no means limited to the above embodiments. Various changes which one of ordinary skill in the art can understand can be applied to the configurations and the details of the present invention within the scope of the invention.

This application claims priority to Japanese Patent Application No. 2012-269068 filed on December 10, 2012, the entire contents of which are incorporated by reference herein.

### Reference Signs List

11, 21, 31, 41 FIRST LEG
12, 22, 32, 42 SECOND LEG
13, 23, 33, 43 THIRD LEG
14, 24, 34, 44 FOURTH LEG
25 FIFTH LEG
19 CONTROL UNIT
52 CONTROL INSTRUCTION
60 AC THROUGH LEG
100, 170, 200, 300, 400, 500, 600, 700, 1011 TO 1014 POWER ROUTER
101 DIRECT CURRENT BUS
102 COMMUNICATION BUS
103 VOLTAGE SENSOR
111, 121, 131, 141, 151 POWER CONVERTING UNIT
111D FEEDBACK DIODE
111P ANTIPARALLEL CIRCUIT
111T THYRISTOR
112, 122, 132, 142, 152, 162 CURRENT SENSOR
113, 123, 133, 143, 153, 163 SWITCH
114, 124, 134, 144, 154, 164 VOLTAGE SENSOR
115, 125, 135, 145, 155, 165 CONNECTION TERMINAL
121T THYRISTOR
191 STORAGE UNIT
192 CPU
193 CONTROL INSTRUCTION DATABASE (#1DB)
194 LEG IDENTIFICATION INFORMATION DATABASE (#2DB)
195 OPERATION PERFORMANCE DATABASE (#3DB)
196 COMPATIBILITY INFORMATION DATABASE (#4DB)
197 MANAGEMENT INFORMATION DATABASE (#5DB)
211, 221, 231, 241, 251, 311, 321, 331, 341, 351 STORAGE UNIT
212, 222, 232, 242, 252 IDENTIFICATION INFORMATION
411, 421, 431, 441, 451 ARITHMETIC OPERATION UNIT
511, 521, 531, 541, 551 DETERMINATION TARGET INFORMATION
810, 1001 TO 1003 POWER NETWORK SYSTEM
811, 811A TO 811C CORE SYSTEM
812 LARGE-SCALE POWER GENERATION PLANT
821 TO 824 POWER CELL
831 HOUSE
832 BUILDING
833 SOLAR PANEL
834 WIND POWER GENERATOR
835 BATTERY
841 TO 844 POWER ROUTER
850 MANAGEMENT SERVER
851 COMMUNICATION NETWORK
1021, 1022 CONNECTION WIRE
1023 POWER DISTRIBUTION LINE

## Claims

1. A power router comprising:
a direct current bus that maintains a voltage at a predetermined voltage rating;
a plurality of power converting legs that each include a first connection terminal connected to the direct current bus, include a second connection terminal connected as an external connection terminal to an external connection party and include a function of bidirectionally converting power between the first connection terminal and the second connection terminal; and
controlling means for controlling an operation of each of the plurality of power converting legs, wherein
the controlling means includes first storage means for holding a first database that includes identification information of each of the plurality of power converting legs, and executes the operation of each of the power converting legs referring to the identification information of the first database.

2. The power router according to Claim 1, wherein the identification information includes a type of an operation mode of each of the power converting legs.

3. The power router according to Claim 2, wherein the operation mode includes at least an operation mode of maintaining the voltage of the direct current bus.

4. The power router according to Claim 2 or 3, wherein
the first storage means further holds a second database that includes an operation instruction specified by a management server, with respect to each of the plurality of power transforming legs, and
the controlling means further includes first arithmetic operation means for reading the operation instruction with respect to each of the plurality power converting legs, from the second database, and outputting the operation instruction to each of the plurality of power converting legs referring to the identification information of the first database.

5. The power router according to Claim 4, wherein
the second database includes information for specifying the operation mode of each of the plurality of power routes, and
the first arithmetic operation means controls the operation mode of each of the plurality of power routes based on the second database.

6. The power router according to Claim 4 or 5, wherein, in a situation that an additional power converting leg that includes second storage means for including identification information of the additional power converting leg and that is other than the plurality of power converting legs is added,
the first arithmetic operation means outputs a response request instruction to the additional power converting leg,
the additional power converting leg outputs the identification information of the additional power converting leg from the second storage means to the first arithmetic operation means, in response to the response request instruction, and
the first arithmetic operation means embeds the received identification information of the additional power converting leg, in the first database to update.

7. The power router according to Claim 6, wherein the first arithmetic operation means notifies the management server of that the additional power converting leg has been added.

8. The power router according to Claim 6 or 7, wherein
the plurality of power converting legs each include the second storage means,
the second storage means of each of the plurality of power converting legs holds a parameter for calculating operation performance of each of the power converting legs in which the second storage means is embedded,
the plurality of power converting legs each output the parameter for calculating the operation performance of each of the power converting legs, to the first arithmetic operation means in response to the response request instruction, and
the first arithmetic operation means calculates the operation performance of each of the plurality of power converting legs based on the received parameter for calculating the operation performance,
causes the first storage means as a third database to hold the calculated operation performance of each of the plurality of power converting legs,
compares the operation performance of each of the plurality of power converting legs included in the third database, and the operation instruction included in the second database, and
notifies the management server of that the request is unacceptable when the operation instruction exceeds the operation performance.

9. The power router according to Claim 8, wherein
the second storage means of the additional power converting leg holds a parameter for calculating operation performance of the additional power converting leg,
the additional power converting leg further outputs the parameter for calculating the operation performance of the additional power converting leg, to the first arithmetic operation means in response to the response request instruction, and
the first arithmetic operation means calculates the operation performance of the additional power converting leg based on the parameter for calculating the operation performance of the additional power converting leg,
causes the first storage means as the third database to hold the calculated operation performance,
compares the operation performance of the additional power converting leg included in the third database, and the operation instruction included in the second database, and
notifies the management server of that the request is unacceptable when the operation instruction exceeds the operation performance.

10. The power router according to Claim 4 or 5, wherein
the plurality of power converting legs each include second storage means
the second storage means of each of the plurality of power converting legs holds a parameter for calculating operation performance of each of the power converting legs in which the second storage means is embedded,
the first arithmetic operation means outputs a response request instruction to the plurality of power converting legs,
the plurality of power converting legs each output the parameter for calculating operation performance of each of the power converting legs, to the first arithmetic operation means in response to the response request instruction, and
the first arithmetic operation means calculates the operation performance of each of the plurality of power converting legs, based on the received parameter for calculating the operation performance,
causes the first storage means as a third database to hold the calculated operation performance of each of the plurality of power converting legs,
compares the operation performance of each of the plurality of power converting legs included in the third database, and the operation instruction included in the second database, and
notifies the management server of that the request is unacceptable when the operation instruction exceeds the operation performance.

11. The power router according to Claim 6 or 7, wherein
the plurality of power converting legs each include the second storage means and second arithmetic operation means,
the second storage means of each of the plurality of power converting legs holds a parameter for calculating operation performance of each of the power converting legs in which the second storage means is embedded,
the first arithmetic operation means outputs a parameter of the power router for calculating the operation performance of each of the plurality of converting legs, to each of the plurality of power converting legs,
the second arithmetic operation means of each of the plurality of power converting legs calculates the operation performance of each of the power converting legs in response to the response request instruction and the parameter of the power router, and outputs the operation performance to the first arithmetic operation means, and
the first arithmetic operation means causes the first storage means as a third database to hold the received operation performance of each of the plurality of power converting legs,
compares the operation performance of each of the plurality of power converting legs included in the third database, and the operation instruction included in the second database, and
notifies the management server of that the request is unacceptable when the operation instruction exceeds the operation performance.

12. The power router according to Claim 11, wherein
the additional power converting leg further includes the second arithmetic operation means,
the second storage means of the additional power converting leg holds a parameter for calculating operation performance of the additional power converting leg,
the first arithmetic operation means further outputs to the additional power converting leg a parameter of the power router for calculating the operation performance of the additional power converting leg,
the second arithmetic operation means of the additional power converting leg calculates the operation performance of the additional power converting leg in response to the response request instruction and the parameter of the power router, and outputs the operation performance to the first arithmetic operation means, and
the first arithmetic operation means causes the first storage means as the third database to hold the received operation performance of the additional power converting leg,
compares the operation performance of the additional power converting leg included in the third database, and the operation instruction included in the second database, and
notifies the management server of that the request is unacceptable when the operation instruction exceeds the operation performance.

13. The power router according to Claim 4 or 5, wherein
the plurality of power converting legs each include second storage means and second arithmetic operation means,
the second storage means of each of the plurality of power converting legs holds a parameter for calculating operation performance of each of the power converting legs in which the second storage means is embedded,
the first arithmetic operation means outputs to each of the plurality of power converting legs a response request instruction, and a parameter of the power router for calculating the operation performance of each of the plurality of power converting legs,
the second arithmetic operation means of each of the plurality of power converting legs calculates the operation performance of each of the power converting legs in response to the response request instruction and the parameter of the power router, and outputs the operation performance to the first arithmetic operation means, and
the first arithmetic operation means causes the first storage means as a third database to hold the received operation performance of each of the plurality of power converting legs,
compares the operation performance of each of the plurality of power converting legs included in the third database, and the operation instruction included in the second database, and
notifies the management server of that the request is unacceptable when the operation instruction exceeds the operation performance.

14. The power router according to Claim 6 or 7, wherein
the plurality of power converting legs each include the second storage means,
the second storage means of the plurality of power converting legs holds determination target information indicating whether or not each of the power converting legs in which the second storage means is embedded is compatible with the power router,
the first storage means further holds a fourth database that includes compatibility determination information that serves as a criterion for determining whether or not the additional power converting leg is compatible with the power router,
in a situation that the additional power converting leg is added,
the plurality of power converting legs each output the determination target information to the first arithmetic operation means in response to the response request instruction, and
the first arithmetic operation means compares the compatibility determination information and the determination target information, and
does not cause the additional power converting leg to operate when the compatibility determination information and the determination target information do not match.

15. The power router according to Claim 14, wherein, when the compatibility determination information and the determination target information do not match, the first arithmetic operation means embeds an incompatibility flag of the additional power converting leg in the fourth database,
does not cause a power converting leg corresponding to the incompatibility flag.

16. The power router according to any one of Claims 8, 9, 11 and 12, wherein
the second storage means of the additional power converting leg holds determination target information indicating whether or not the additional power converting leg is compatible with the power router,
the first storage means further holds a fourth database that includes compatibility determination information that serves as a criterion for determining whether or not the additional power converting leg is compatible with the power router,
in a situation that the additional power converting leg is added,
the additional power converting leg outputs the determination target information to the first arithmetic operation means in response to the response request instruction, and
the first arithmetic operation means compares the compatibility determination information and the determination target information, and
does not cause the additional power converting leg to operate when the compatibility determination information and the determination target information do not match.

17. The power router according to Claim 16, wherein, when the compatibility determination information and the determination target information do not match, the first arithmetic operation means embeds an incompatibility flag of the additional power converting leg in the fourth database, and
does not cause the additional power converting leg to operate.

18. The power router according to Claim 17, wherein, when the compatibility determination information and the determination target information do not match, the first arithmetic operation means sets to 0 a value indicating operation performance of the additional power converting leg in the third database.

19. The power router according to any one of Claims 16 to 18, wherein
the plurality of power converting leg each include the second storage means,
the second storage means of each of the plurality of power converting legs holds determination target information indicating whether or not each of the power converting legs in which the second storage means is embeds is compatible with the power router,
the first storage means further holds a fourth database that includes compatibility determination information that serves as a criterion for determining whether or not the additional power converting leg is compatible with the power router,
in a situation that the additional power converting leg is added,
the plurality of power converting legs each output the determination target information to the first arithmetic operation means in response to the response request instruction, and
the first arithmetic operation means compares the compatibility determination information and the determination target information,
does not cause the additional power converting leg to operate when the compatibility determination information and the determination target information do not match.

20. The power router according to Claim 19, wherein, when the compatibility determination information and the determination target information do not match, the first arithmetic operation means embeds an incompatibility flag of the additional power converting leg in the fourth database, and
does not cause a power converting leg corresponding to the incompatibility flag to operate.

21. The power router according to Claim 20, wherein, when the compatibility determination information and the determination target information do not match, the first arithmetic operation means sets to 0 a value indicating operation performance of the power converting leg corresponding to the incompatibility flag of the third database among the plurality of power converting legs.

22. The power router according to any one of Claims 1 to 21, wherein the first storage means further holds a fifth database in which operation history information of each of the plurality of power converting legs is recorded.

23. A power network system comprising:
one or a plurality of power routers; and
a power system that the one or the plurality of power routers is directly or indirectly connected with, wherein
the one or the plurality of power routes each include
a direct current bus that maintains a voltage at a predetermined voltage rating,
a plurality of power converting legs that each include a first connection terminal connected to the direct current bus, include a second connection terminal connected as an external connection terminal to an external connection party and include a function of bidirectionally converting power between the first connection terminal and the second connection terminal, and
controlling means for controlling an operation of each of the plurality of power converting legs, and
the controlling means includes first storage means for holding a first database that includes identification information of each of the plurality of power converting legs, and
executes the operation of each of the power converting legs referring to the identification information of the first database.

24. A power router operation control method comprising, in a power router that includes
a direct current bus that maintains a voltage at a predetermined voltage rating, and
a plurality of power converting legs that each include a first connection terminal connected to the direct current bus, include a second connection terminal connected as an external connection terminal to an external connection party and include a function of bidirectionally converting power between the first connection terminal and the second connection terminal,
outputting an operation instruction to each of the plurality of power converting legs referring to the identification information of a first database that includes identification information of each of the plurality of power converting legs, and controlling an operation of each of the plurality of power converting legs.

25. A non-transitory computer readable medium having stored thereon a power router operation control program, the program causing a computer to, in a power router that includes
a direct current bus that maintains a voltage at a predetermined voltage rating,
a plurality of power converting legs that each include a first connection terminal connected to the direct current bus, include a second connection terminal connected as an external connection terminal to an external connection party and include a function of bidirectionally converting power between the first connection terminal and the second connection terminal; and
the computer that configures controlling means for controlling an operation of each of the plurality of power converting legs, and
in which the computer includes first storage means for holding in advance a first database that includes identification information of each of the plurality of power converting legs,
execute processing of outputting an operation instruction to each of the plurality of operation converting legs referring to the identification information of the first database, and controlling an operation of each of the plurality of power converting legs.
